# EUROPÄISCHE PATENTSCHRIFT

(11) **EP 3 626 535 B1**
(45) Veröffentlichungstag und Bekanntmachung des Hinweises auf die Patenterteilung: **30.03.2022**
(21) Anmeldenummer: 18195729.1
(22) Anmeldetag: 20.09.2018
(51) Int. Cl.: B60Q 1/26

(54) **KENNLEUCHTE ODER WARNLEUCHTE FÜR EIN FAHRZEUG SOWIE ANORDNUNG EINER SOLCHEN LEUCHTE AN EINEM FAHRZEUG**
MARKER LIGHT OR WARNING LIGHT FOR A VEHICLE AND ASSEMBLY OF SUCH A LIGHT ON A VEHICLE
BALISE LUMINEUSE OU BALISE D'AVERTISSEMENT POUR UN VÉHICULE AINSI QU'AGENCEMENT D'UNE TELLE LUMIÈRE SUR UN VÉHICULE

(43) Veröffentlichungstag der Anmeldung: 25.03.2020
(73) Patentinhaber: Ambulanz Mobile GmbH & Co. KG, 39218 Schönebeck (DE)
(72) Erfinder: Schwarz, Hans-Jürgen, 39218 Schönebeck (DE)
(74) Vertreter: Freischem & Partner Patentanwälte mbB

(56) Entgegenhaltungen:
- DE-U1-202006 000 974
- DE-U1-202007 012 557
- US-B1- 7 106 185
- US-B1- 9 409 528
- US-B1- 9 428 099

## Beschreibung

Die Erfindung betrifft eine Kennleuchte oder Warnleuchte für ein Fahrzeug sowie eine Anordnung einer solchen Leuchte an einem Fahrzeug bzw. ein Fahrzeug mit mindestens einer solchen Kennleuchte oder Warnleuchte. Insbesondere sind mit Fahrzeugen in dieser Offenbarung Kraftfahrzeuge gemeint. Vom Schutz grundsätzlich umfasst sind jedoch auch andere Fahrzeuge, wie z.B. Wasserfahrzeuge, Luftfahrzeuge und Schienenfahrzeuge.

Aus der Praxis sind Fahrzeuge mit Kennleuchten oder Warnleuchten insbesondere in Form von Fahrzeugen der Polizei und Feuerwehr sowie in Form von Krankentransportwagen und Rettungstransportwagen bekannt. Krankentransportwagen und Rettungstransportwagen werden im Folgenden allgemein als Ambulanzfahrzeuge zusammengefasst.

Bei den aus der Praxis bekannten Ambulanzfahrzeugen kamen in der Vergangenheit neben akustischen Warneinreichungen als optische Warneinrichtungen häufig Rundumkennleuchten mit einer drehbaren Mechanik zur räumlichen Verteilung des fokussierten Lichtes zum Einsatz. Mit zunehmender Verbreitung der LED-Technik wurde die drehbare Mechanik in neueren Ausführungsformen durch über den Umfang verteilt angeordnete, nicht bewegliche Dioden ersetzt, die einzeln oder als Gruppen angesteuert und zum Aufleuchten bzw. Blinken entsprechend aktiviert werden.

Als lichtdurchlässsige (transluzente) Gehäuse für die jeweilige Lichttechnik werden üblicherweise zylindrische und anders geformte Blaulichthauben eingesetzt, die auf dem Fahrzeugdach entweder additiv aufgesetzt oder in das jeweilige Fahrzeugdach integriert sind. In das Fahrzeugdach integrierte Blaulichthauben haben den Vorteil, dass sie sich der aerodynamischen Form des Fahrzeuges anpassen, einen geringeren Luftwiderstand verursachen und ein flexibles und moderneres Design ermöglichen. Aufgrund der Tatsache, dass sich die am Markt existierenden Fahrzeugtypen in ihrer Außenhautgestaltung hinsichtlich Kontur und Krümmung unterscheiden, sind allerdings für jeden Fahrzeugtyp individuelle Gehäuse für die Blaulichthauben erforderlich, wenn diese in das Fahrzeugdach integriert werden sollen.

Aus DE 20 2006 000 974 U1 ist eine Haltvorrichtung für Warnvorrichtung auf Dächern von Einsatzfahrzeugen bekannt. Die Haltevorrichtung weist einen wenigstens abschnittsweise auf einem Fahrzeugdach aufliegenden Dachaufsatz auf, welcher zur Befestigung der Warnvorrichtung dient. Der Dachaufsatz ist wenigstens abschnittsweise als Schaumteil ausgebildet, wodurch insbesondere die Lärmbelastung für Insassen des Einsatzfahrzeuges bei akustischem Signaleinsatz verringert werden soll.

Der Erfindung liegt die Aufgabe zugrunde, eine Kennleuchte oder Warnleuchte für ein Fahrzeug sowie ein Fahrzeug mit einer solchen daran angeordneten Leuchte zur Verfügung zu stellen, welche eine hohe Designfreiheit ermöglichen und in Verbindung mit unterschiedlichen Fahrzeugtypen nutzbar sind.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Kennleuchte oder Warnleuchte für ein Fahrzeug weist mindestens einen, zumindest teilweise transluzenten Gehäusekörper zur Aufnahme von mindestens einem Leuchtmittel und mindestens eine Montagefläche auf, die im an einem Fahrzeug montierten Zustand dem Fahrzeug zugewandt angeordnet ist. Der mindestens eine transluzente Gehäusekörper ist vollständig aus einem elastisch dehnbaren Werkstoff ausgebildet ist, welcher sich sowohl zur Anpassung an eine gekrümmte Oberfläche der Außenhaut eines Fahrzeuges als auch zur Montage an dem Fahrzeug ausreichend verformen lässt. Dabei ist entweder
a) die Montagefläche zumindest teilweise derart elastisch ausgebildet, dass die Montagefläche zumindest in dem elastisch ausgebildeten Bereich an eine gekrümmte Oberfläche der Außenhaut eines Fahrzeuges anpassbar ist,
   und/oder
b) die Montagefläche ist zumindest teilweise derart elastisch ausgebildet, dass die Montagefläche durch elastische Dehnung und Fixierung in einem elastisch gedehnten Zustand durch Verspannen an einer gekrümmten Oberfläche der Außenhaut eines Fahrzeuges montierbar ist.

Mit einer "gekrümmten Oberfläche" sind im Rahmen dieser Offenbarung Oberflächen der sogenannten Außenhaut eines Fahrzeuges gemeint, d.h. Außenhaut-Oberflächen, beispielsweise die Fahrzeug-Dachfläche(n) und/oder überwiegend vertikal verlaufende Fahrzeug-Seitenflächen einschließlich front- und heckseitiger Fahrzeug-Seitenflächen, vor allem an die Dachfläche angrenzende Fahrzeug-Seitenflächen und/oder obere Fahrzeug-Seitenflächen. Hinsichtlich oberer Fahrzeug-Seitenflächen wird beispielsweise auf diejenigen Fahrzeug-Seitenflächen verwiesen, welche sich mindestens 1 m, 1,2 m 1,5 m oder 2 m oberhalb der jeweiligen Aufstandsfläche eines entsprechenden Fahrzeuges befinden.

Erfindungsgemäße Kennleuchten oder Warnleuchten haben den Vorteil, dass diese aufgrund eines zumindest teilweise im Bereich der Montagefläche elastisch ausgebildeten Abschnitts an die Fahrzeugoberfläche anpassbar und/oder an unterschiedlich gekrümmten Oberflächen von verschiedenen Fahrzeugen leicht und flexibel montierbar sind. Dadurch ist zum einen ein flexibler Einsatz an verschiedenen Fahrzeugtypen möglich und zum anderen eine größere Designfreiheit gegeben. Insbesondere können aerodynamisch vorteilhafte und/oder außergewöhnlich designte Kennleuchten oder Warnleuchten aufgrund der flexiblen Einsatzmöglichkeiten in großen Stückzahlen kostengünstig produziert und als "Standardelement" für verschiedene Fahrzeuge angeboten werden.

In einer praktischen Ausführungsform einer erfindungsgemäßen Kennleuchte oder Warnleuchte sind zwei oder mehr transluzente Gehäusekörper funktional mit einer Montagefläche gekoppelt. Diese Ausführungsform ist insbesondere in Verbindung mit der vorstehend beschriebenen Variante b) von Vorteil, wenn beispielsweise eine sich über einen Großteil der Breite eines Fahrzeugdachs und/oder eine sich über einen großen Teil der Länge eines Fahrzeugdachs erstreckende Montagefläche vorgesehen ist, auf welcher zwei oder mehr transluzente Gehäusekörper angeordnet sind. In diesem Fall dient die elastisch ausgebildete Montagefläche als flexibel anpassbarer Bereich, welcher die Montage an verschieden gekrümmten und geformten Fahrzeugtypen ermöglichen. Der Vollständigkeit halber wird darauf hingewiesen, dass es ausreichend ist, ein oder mehrere Teilbereiche elastisch dehnbar auszubilden, um durch den jeweils elastisch dehnbar ausgebildeten Teilbereich der Montagefläche eine erforderliche Anpassung zu ermöglichen. Dennoch wird durch den Einsatz einer sich über die gesamte Breite und/oder die gesamte Länge der jeweiligen Kennleuchte oder Warnleuchte erstreckende Montagefläche die Flexibilität erhöht und insbesondere auch eine Anpassung an sich über die gesamte Fahrzeugdachbreite und/oder die Fahrzeugdachlänge erstreckende, unterschiedliche Geometrien ermöglicht.

In einer weiteren praktischen Ausführungsform sind an der Montagefläche mehrere Kupplungselemente zur Fixierung der Kennleuchte oder Warnleuchte an einem Fahrzeug vorgesehen, insbesondere zur Fixierung an einem Außenhautelement eines Fahrzeuges. Als derartige Kupplungselemente zur Fixierung der Kennleuchte oder Warnleuchte an einem Fahrzeug kommen insbesondere Öffnungen und/oder Spannbänder in Frage. Besonders vorteilhaft ist es in diesem Zusammenhang, wenn die Öffnungen, insbesondere Durchgangsöffnungen, und/oder Spannbänder an der Montagefläche selbst vorgesehen und fest mit der Montagefläche verbunden sind.

Eine feste Verbindung kann entweder durch einstückige Ausbildung oder durch sonstige lösbare oder unlösbare Verbindungen realisiert sein. Alternativ ist es auch möglich, Spannbänder oder sonstige als Kupplungselemente vorgesehene Elemente zur Fixierung der Kennleuchte oder Warnleuchte an einem Fahrzeug lösbar an der Kennleuchte oder Warnleuchte anzuordnen.

In einer weiteren praktischen Ausführungsform einer erfindungsgemäßen Kennleuchte oder Warnleuchte ist die Montagefläche derart ausgebildet, dass sich diese von einer Dachfläche eines Fahrzeuges (Fahrzeug-Dachfläche) bis zu mindestens einer Fahrzeug-Seitenfläche erstreckt, insbesondere zu einer rechten und einer linken seitlichen Fahrzeug-Seitenfläche. In diesem Fall ist der zumindest teilweise elastisch ausgebildete Bereich der Montagefläche von besonderem Nutzen, wenn sich eine das Dach und einen oberen Bereich der seitlichen Fahrzeug-Seitenflächen umklammernde Anordnung ergibt, die bei verschiedenen Fahrzeugtypen unabhängig von der Breite und jeweiligen Krümmung im Bereich des Übergangs zwischen Fahrzeug-Dachfläche und Fahrzeug-Seitenfläche realisierbar ist.

Eine besonders kostengünstige Herstellung einer erfindungsgemäßen Kennleuchte oder Warnleuchte ergibt sich, wenn der Gehäusekörper zumindest teilweise aus einem ersten Werkstoff hergestellt ist und die Montagefläche zumindest teilweise aus einem zweiten Werkstoff hergestellt ist. In diesem Fall kann beispielsweise der Gehäusekörper aus einem ersten - insbesondere formstabilen - Werkstoff hergestellt sein und die Montagefläche zumindest teilweise aus einem zweiten - insbesondere elastischen - Werkstoff hergestellt sein.

Als erster Werkstoff eignen sich insbesondere Werkstoffe mit geringer Elastizität, die vorzugsweise weitestgehend formstabil sind, insbesondere thermoplastische oder duroplastische Kunststoffe, metallische Werkstoffe etc. Insbesondere wird in diesem Zusammenhang auf Trägerelemente für die Lichttechnik aus einem Acrylnitril-Butadien-Styrol-Copolymer (kurz: ABS-Träger) verwiesen. An solchen Trägern oder Trägern aus anderen - insbesondere formstabilen - Werkstoffen ist vorzugsweise ein Kragen ausgebildet, welcher zur Anbindung einer transluzenten Scheibe genutzt wird, insbesondere eine blau, gelb oder andersfarbig getönte Scheibe. Die Verbindung kann dabei insbesondere durch Verkleben erfolgen, vorzugsweise derart, dass die Lichttechnik abgedichtet von Träger und Scheibe umschlossen und so vor Umwelteinflüssen geschützt ist. Alternativ oder in Ergänzung können eine Scheibe und ein Trägerelement auch anderweitig miteinander verbunden werden, beispielsweise indem eine lösbare Schraubverbindung mit dichtender Anlage der Scheibe an dem Trägerkörper vorgesehen ist. Vorzugsweise erfolgt die Verschraubung in diesem Fall von der Unterseite, so dass der direkte Einfluss von Regen und sonstiger schwerkraftbedingt fallender Feuchtigkeit minimiert ist. Als Material für die Scheibe eignet sich insbesondere Polycarbonat (PC). Bei dem Gehäusekörper kann es sich beispielsweise um ein aus der Praxis bekanntes Gehäuse einer Kennleuchte oder Warnleuchte handeln.

Als zweiter Werkstoff eignen sich insbesondere Werkstoffe, die derart elastisch sind, dass sie sich zur Anpassung an die Oberfläche und/oder zum Verspannen ähnlich wie ein Spannband elastisch längen und somit mit einer durch elastische Dehnung bewirkten Vorspannung versehen lassen. Bevorzugt sind dabei UV-beständige Werkstoffe und solche Werkstoffe, die bis 50 °C, bevorzugt 70 °C und besonders bevorzugt bis 100 °C auch temperaturbeständig sind. Diesbezüglich wird insbesondere auf Silikonwerkstoffe, kautschukbasierte Werkstoffe und auch dünne, metallische Spannbänder verwiesen. Bei der Montagefläche kann es sich insbesondere um eine unmittelbar oder mittelbar mit dem Gehäusekörper verbundene, spannbare "Haut" handeln, die im Wesentlichen zur Montage und Anpassung an die Oberfläche und/oder die Breite und/oder die Länge des jeweiligen Fahrzeugdachs beziehungsweise einer Fahrzeug-Seitenfläche dient.

In einer weiteren praktischen Ausführungsform einer erfindungsgemäßen Kennleuchte oder Warnleuchte weist der Gehäusekörper auf der dem Fahrzeug zugewandten Seite eine L-förmige Kontur auf. Alternativ oder in Ergänzung dazu ist die Montagefläche derart elastisch ausgebildet, dass sie sich derart in eine L-förmige Form bringen lässt, dass sie sich von der Dachfläche eines Fahrzeuges (Fahrzeug-Dachfläche) bis zu einer Seitenfläche eine Fahrzeuges (Fahrzeug-Seitenfläche) erstreckt.

Wenn der Gehäusekörper auf der dem Fahrzeug zugewandten Seite eine L-förmige Kontur aufweist, erstreckt sich die L-förmige Kontur vorzugsweise über die gesamte Länge des Gehäusekörpers.

Die Erfindung betrifft auch eine Anordnung einer wie vorstehend beschrieben Kennleuchte oder Warnleuchte an einem Fahrzeug in einem Bereich mit einer zumindest teilweise gekrümmten Oberfläche, wobei
a) die Montagefläche einen zumindest teilweise elastisch ausgebildeten Bereich aufweist und in dem elastisch ausgebildeten Bereich an die gekrümmte Oberfläche des Fahrzeuges angepasst ist,
   und/oder
b) die Montagefläche durch elastische Dehnung und Verspannen in einen elastisch gedehnten Zustand an der Oberfläche (insbesondere an der Außenhaut) eines Fahrzeuges fixiert ist.

Auf die vorstehend bereits in Verbindung mit der erfindungsgemäßen Kennleuchte oder Warnleuchte beschriebenen Vorteile wird hiermit noch einmal verwiesen.

In einer praktischen Ausführungsform einer erfindungsgemäßen Anordnung ist die Kennleuchte oder Warnleuchte durch Zusammenwirken von am Fahrzeug oder an der Kennleuchte oder Warnleuchte vorgesehen Vorsprüngen mit korrespondierenden Öffnungen, insbesondere Durchgangsöffnungen, an dem jeweils anderen Element an dem Fahrzeug montiert. Die Vorsprünge weisen in einer bevorzugten Ausführungsform, insbesondere an dem jeweils freien, vom Fahrzeug entfernten Ende, eine Verdickung auf, beispielsweise eine Verdickung in Form einer pilzkopfartigen Gestaltung. Dies hat den Vorteil, dass einem Lösen einer montierten Kennleuchte oder Warnleuchte von dem Fahrzeug entgegengewirkt wird.

In einer weiteren praktischen Ausführungsform einer erfindungsgemäßen Anordnung erstreckt sich die Montagefläche im an dem Fahrzeug montierten Zustand über einen Großteil der Länge des Fahrzeugdachs. Alternativ oder in Ergänzung dazu sind als Verbindungselement zwischen der Kennleuchte oder Warnleuchte einerseits und dem Fahrzeug andererseits klammerartige Spannbügel vorgesehen, welche kraftschlüssig, formschlüssig und/oder stoffschlüssig gegenüber dem Fahrzeug fixiert sind. Bei dieser Anordnung sind vorzugsweise mindestens zwei transluzente Gehäusekörper, insbesondere ein vorderer und ein hinterer Gehäusekörper und/oder ein rechter und einer linker Gehäusekörper, funktional mit einer Montagefläche gekoppelt und als Funktionseinheit mit dem Fahrzeugdach verspannt. Die Montagefläche erstreckt sich im Einzelfall bis zu einer Fahrzeug-Seitenfläche oder von einer linken Fahrzeug-Seitenfläche bis zu einer rechten Fahrzeug-Seitenfläche.

Weitere praktische Ausführungsformen und Vorteile der Erfindung sind nachfolgend im Zusammenhang mit den Zeichnungen beschrieben. Es zeigen:
- Fig. 1: ein Kraftfahrzeug mit einer ersten Ausführungsform einer erfindungsgemäßen Kennleuchte bzw. eine entsprechende Anordnung in einer perspektivischen Ansicht,
- Fig. 2: ein Kraftfahrzeug mit einer zweiten Ausführungsform erfindungsgemäßer Kennleuchten bzw. entsprechende Anordnungen in einer perspektivischen Ansicht,
- Fig. 3: ein Kraftfahrzeug mit einer dritten Ausführungsform erfindungsgemäßer Kennleuchten bzw. entsprechende Anordnungen in einer perspektivischen Ansicht,
- Fig. 4: eine Detailansicht des Dachbereiches des in Fig. 3 Kraftfahrzeuges mit den beiden vorderen Kennleuchten in einer perspektivischen Ansicht,
- Fig. 5: ein Kraftfahrzeug mit einer vierten Ausführungsform erfindungsgemäßer Kennleuchten bzw. entsprechende Anordnungen in einer perspektivischen Ansicht,
- Fig. 6: eine Schnittdarstellung durch eine erfindungsgemäße Kennleuchte, die über Vorsprünge mit pilzkopfartigen Elementen an einem Kraftfahrzeug befestigt ist,
- Fig. 7: eine Schnittdarstellung durch eine weitere erfindungsgemäße Kennleuchte, die über Vorsprünge mit pilzkopfartigen Elementen an einem Kraftfahrzeug befestigt ist,
- Fig. 8: eine schematische Detail-Schnittdarstellung einer erfindungsgemäßen Anordnung mit Kupplungselementen in Form von Schraubelementen, die pilzkopfartige Endabschnitte aufweisen,
- Fig. 9: eine schematische Detail-Schnittdarstellungen einer erfindungsgemäßen Anordnung mit alternativen Kupplungselementen in Form von Schraubelementen, die pilzkopfartige Endabschnitte aufweisen,
- Fig. 10: eine schematische Schnittdarstellung einer erfindungsgemäßen Anordnung mit Kupplungselementen, die pilzkopfartige Endabschnitte aufweisen sowie
- Fig. 11: eine schematische Schnittdarstellung einer erfindungsgemäßen Anordnung mit Kupplungselementen, die pilzkopfartige Endabschnitte und klammerartige Spannbügel aufweisen.

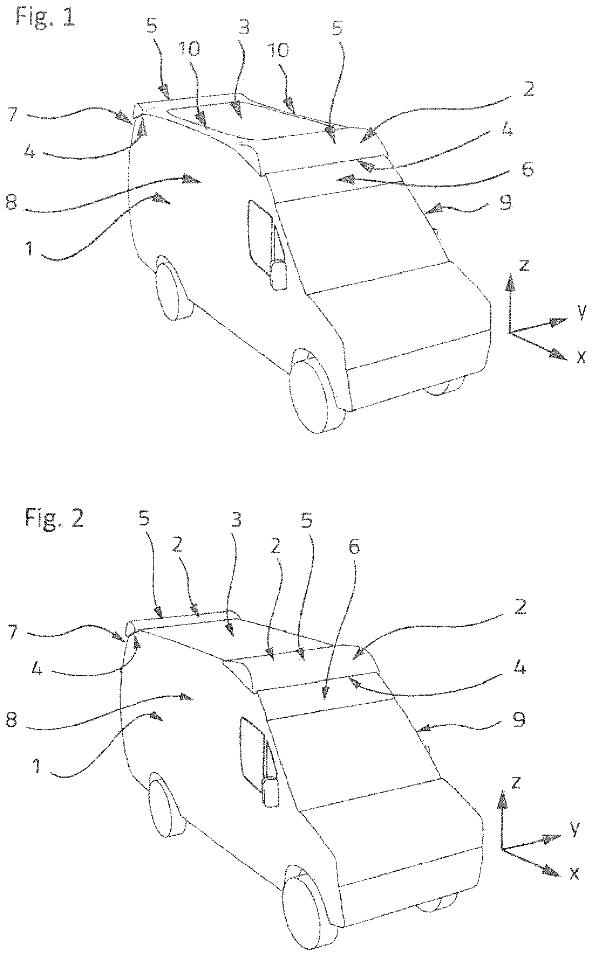

Figur 1 zeigt ein Fahrzeug 1 in Form eines Kraftfahrzeuges mit einer ersten Ausführungsform einer erfindungsgemäßen Kennleuchte 2. Die Kennleuchte 2 weist in dem in Figur 1 gezeigten Ausführungsbeispiel zwei transluzente Körper 5 auf, nämlich eine vorderen transluzenten Körper 5, welcher sich über die gesamte Breite des Fahrzeugdachs 3 erstreckt, und ein hinteren transluzenten Körper 5, welcher sich ebenfalls über die gesamte Breite des Fahrzeugdachs 3 erstreckt. Die Fahrzeuglängsrichtung (x-Richtung) des Kraftfahrzeuges ist in Figur 1 und in allen weiteren Figuren in einem entsprechenden Koordinatensystem mit x gekennzeichnet, die Fahrzeugquerrichtung (y-Richtung) mit y und die Fahrzeughochrichtung (z-Richtung) mit z.

Die Kennleuchte 2 weist im Bereich der transluzenten Körper 5 nach unten in Richtung des Fahrzeugdachs 3 orientierte Montageflächen 4 auf, welche in der gezeigten Ausführungsform zumindest insoweit elastisch ausgebildet sind, dass sich die jeweilige Montagefläche 4 an die Krümmung der Dachfläche 3 des Fahrzeugs in Richtung der vorderen Fahrzeug-Seitenfläche 6 und in Richtung der hinteren Fahrzeug-Seitenfläche 7 anpassen lässt.

Ferner ist zu erkennen, dass die Gehäusekörper 5 auf der dem Fahrzeug zugewandten Seite jeweils außenseitig eine L-förmige Kontur aufweisen, sodass der Gehäusekörper 5 jeweils außenseitig an der rechten Fahrzeug-Seitenfläche 8 und an der linken Fahrzeug-Seitenfläche 9 anliegt.

In der in Figur 1 gezeigten Ausführungsform sind sowohl die transluzenten Gehäusekörper 5 als auch sich zwischen den Gehäusekörpern 5 erstreckende Verbindungsabschnitte 10 vollständig aus einem elastisch dehnbaren Werkstoff ausgebildet, welcher sich sowohl zur Anpassung an die gekrümmte Oberfläche der Dachfläche 3 als auch zur Montage an dem Kraftfahrzeug ausreichend verformen lässt, um einerseits flächig an der Dachfläche 3 beziehungsweise den Fahrzeug-Seitenflächen 7, 8, 9, 10 anzuliegen und zum anderen sicher mit dem Fahrzeug verbunden zu sein.

In der in Figur 1 gezeigten Variante kann die erfindungsgemäße Kennleuchte 2 beispielsweise mittels einer nicht dargestellten Klebverbindung mit dem Kraftfahrzeug verbunden sein.

Figur 2 zeigt eine weitere Ausführungsform, die im Wesentlichen der in Figur 1 gezeigten Ausführungsform entspricht. Anders als in der Figur 1 gezeigten Ausführungsform sind jedoch zwei separate Kennleuchten 2 mit nicht miteinander verbundenen transluzenten Gehäusekörpern 5 vorgesehen. Dementsprechend sind auch keine Verbindungsabschnitte zwischen den beiden transluzenten Gehäusekörpern 5 vorgesehen.

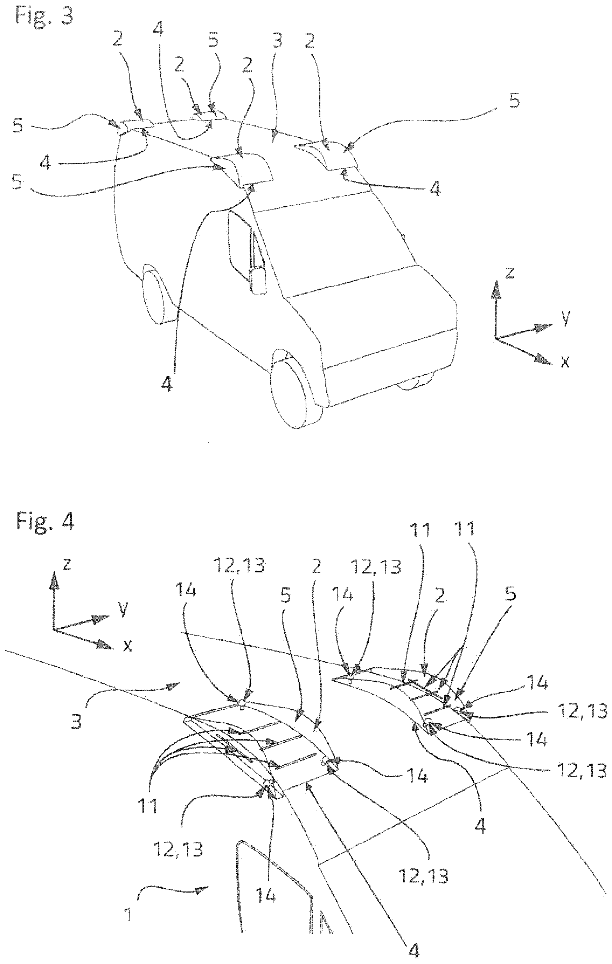

Figur 3 zeigt eine weitere Ausführungsform erfindungsgemäßer Kennleuchten 2, wobei insgesamt vier voneinander unabhängig montierte transluzente Gehäusekörper 5 vorgesehen sind. Im Übrigen weist die in Figur 3 gezeigte Ausführungsform die in Verbindung mit Figuren 1 und 2 beschriebenen Merkmale auf, soweit diese in Figur 3 ebenfalls erkennbar sind.

Abweichend zu den vorstehend beschriebenen Figuren 1 und 2 ist in Figur 4 im Rahmen einer Detailansicht erkennbar, dass innerhalb der transluzenten Gehäusekörper 5 jeweils verschiedene Leuchtmittel 11 angeordnet sind. Ferner sind an dem Kraftfahrzeug als Kupplungselemente 12 zur Fixierung der jeweiligen transluzenten Gehäusekörper 5 jeweils drei Vorsprünge 13 vorgesehen, die jeweils eine Verdickung 14 mit einer pilzkopfartigen Gestaltung im Endbereich aufweisen.

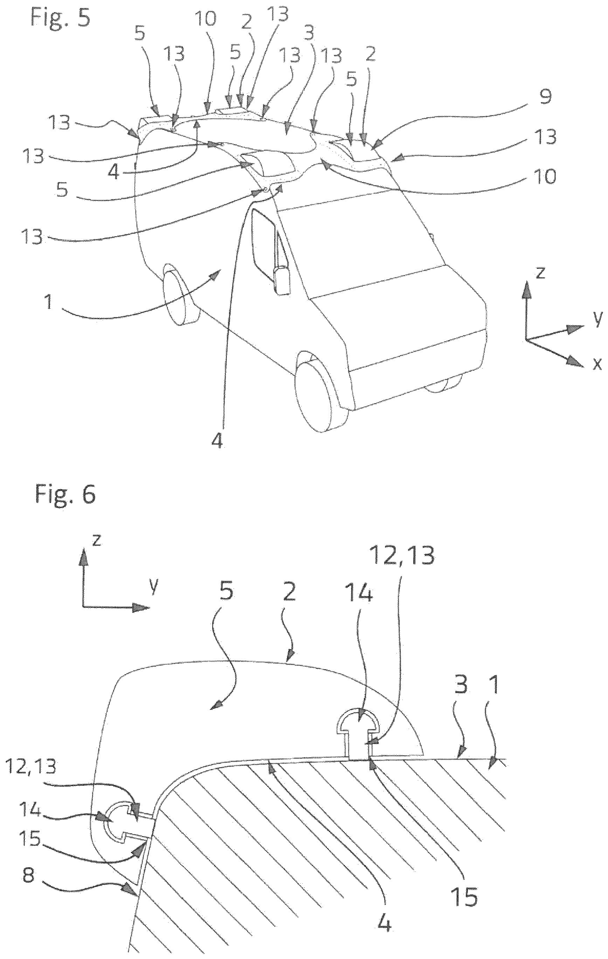

Figur 5 zeigt eine erfindungsgemäße Anordnung, bei welcher analog zu der in Figur 1 gezeigten Anordnung Verbindungsabschnitte 10 jeweils zwischen einem linken transluzenten Gehäusekörper 5 und einem rechten transluzenten Gehäusekörper 5 vorgesehen ist. Es sind dementsprechend zwei erfindungsgemäße Kennleuchten 2 auf der Dachfläche 3 montiert, die jeweils über vier Vorsprünge 13 an dem Fahrzeug 1 befestigt sind.

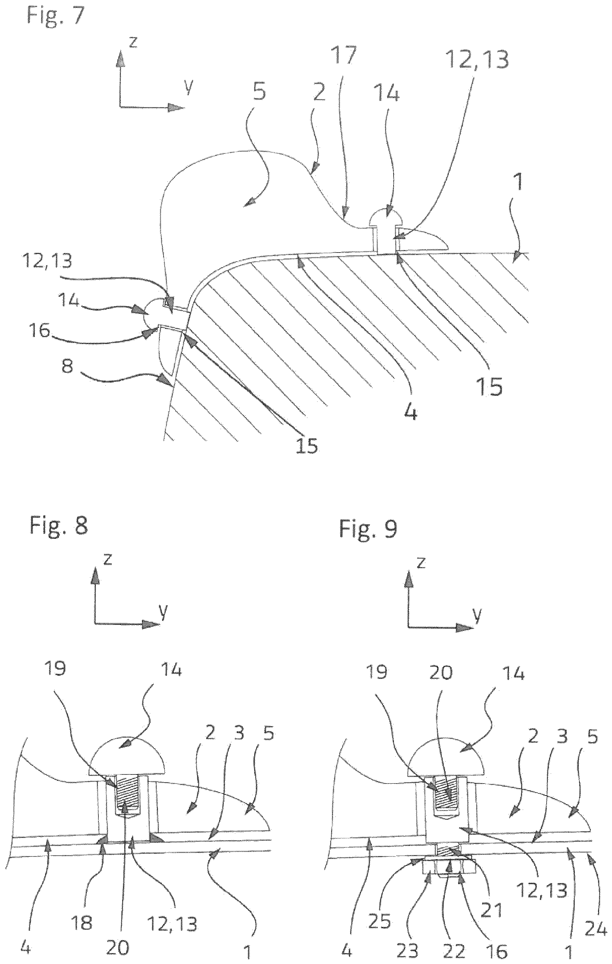

In den Figuren 6 und 7 ist jeweils eine Schnittdarstellung durch eine erfindungsgemäße Kennleuchte 2 gezeigt, die über Vorsprünge 13 mit Verdickungen 14 an einem Kraftfahrzeug befestigt ist. Bei der in Figur 6 gezeigten Ausführungsform sind die Vorsprünge 13 fest mit dem Fahrzeug verbunden. Seitens der Kennleuchte 2 sind im Bereich der Montagefläche 4 Öffnungen 15 vorgesehen, welche zur Montage der Kennleuchte 2 über die Vorsprünge 13 geschoben werden, um die in Figur 6 gezeigte Endmontagelage zu erreichen. Die Vorsprünge 13 tauchen dazu in die Öffnungen 15 ein.

Bei der in Figur 7 gezeigten Ausführungsform sind im Bereich der Montagefläche 4 der Kennleuchte 2 ebenfalls Öffnungen 15 vorgesehen. Diese Öffnungen 15 sind jedoch im Gegensatz zu der in Figur 6 gezeigten Ausführungsform als Durchgangsöffnungen ausgebildet. Die Verdickungen 14 der Vorsprünge 13 tauchen bei dieser Ausführungsform vollständig durch die Öffnungen 15 hindurch, sodass die jeweilige Unterseite 16 der Verdickung 14 als Widerlager dient, welches mit einer außenseitigen Oberfläche 17 der Kennleuchte 2 zusammen wirkt.

In den Figuren 8 und 9 ist jeweils eine schematische Detail-Schnittdarstellung einer erfindungsgemäßen Anordnung mit Kupplungselementen 12 in Form von Schraubelementen dargestellt, welche pilzkopfartige Endabschnitte aufweisen.

Bei der in Figur 8 gezeigten Anordnung ist ein Kupplungselement 12 in Form eines zylindrischen Vorsprungs 13 über eine Schweißnaht 18 mit der Dachfläche 3 eines Fahrzeuges verbunden. In dem Vorsprung 13 ist ein Gewinde 19 ausgebildet, in welches ein Schraubschaft 20, welcher an einer pilzkopfartig geformten Verdickung 14 ausgebildet ist, eingeschraubt ist.

Bei der in Figur 9 gezeigten Anordnung ist der Vorsprung 13 lösbar an der Dachfläche 3 insoweit befestigt, als der Vorsprung 13 selbst ebenfalls einen Schraubschaft 21 aufweist, welcher eine in der Dachfläche 3 ausgebildete Öffnung 22 durchragt. Die Befestigung des Vorsprungs 13 erfolgt mit Hilfe einer handelsüblichen Mutter 23, wobei zwischen der Mutter 23 und der Unterseite 24 der Dachfläche 3 in der gezeigten Ausführungsform zusätzlich eine Scheibe 25 angeordnet ist. Die Befestigung der Verdickung 14, welche bei der in Figur 9 gezeigten Anordnung den gleichen Schraubschaft 20 aufweist wie bei der in Figur 8 gezeigten Ausführungsordnung, erfolgt in gleicher Art und Weise wie bei der in Figur 8 gezeigten Anordnung.

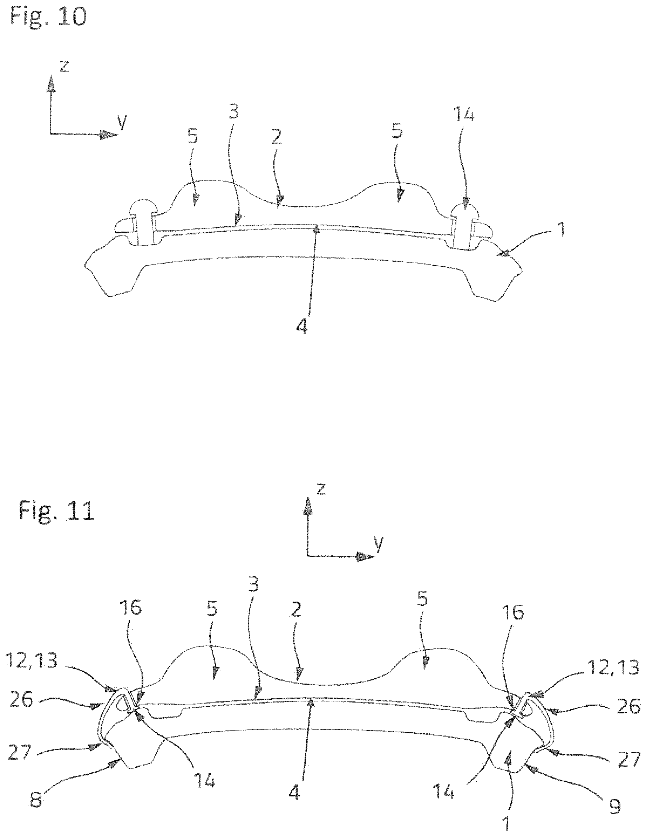

Figur 10 zeigt eine schematische Schnittdarstellung einer erfindungsgemäßen Anordnung mit Kupplungselementen 12, die wiederum Verdickungen 14 mit pilzkopfartigen Endabschnitten aufweisen. Bei dieser Ausführungsform kann die erfindungsgemäße Kennleuchte 2 insbesondere derart ausgelegt sein, dass zur Montage eine elastische Dehnung in Fahrzeugquerrichtung (y-Richtung) erforderlich ist, welche in der in Figur 10 gezeigten Endmontagelage erhalten bleibt und somit die Fixierung der Kennleuchte 2 gegenüber der Dachfläche 3 verbessert. Die Befestigung bei der in Figur 10 gezeigten Anordnung erfolgt in gleicher Weise wie in Verbindung mit den Figuren 7, 8 und 9 beschrieben, wobei es auf die jeweilige Befestigung des Vorsprungs 13 gegenüber der Dachfläche 3 nicht ankommt.

Figur 11 zeigt eine weitere schematische Schnittdarstellung einer erfindungsgemäßen Anordnung mit Kupplungselementen 12. Die bei dieser Anordnung verwendeten Kupplungselemente 12 sind klammerartige Spannbügel 26, welche in dieser Ausführungsform c-förmig ausgebildet sind. Diese Spannbügel 26 weisen ebenfalls einen Vorsprung 13 mit einer Verdickung 14 auf, welche eine in der Kennleuchte 5 ausgebildete Öffnung 15 derart durchgreifen, dass eine Unterseite 16 der Verdickung 14 als Widerlager dient. Das gegenüberliegende freie Ende 27 des c-förmigen Spannbügels 26 umgreift einen oberen Bereich der jeweiligen seitlichen Fahrzeug-Seitenflächen 8, 9 und fixiert somit die Kennleuchte 2 gegenüber der Dachfläche 3. Bei dieser Ausführungsform muss die Kennleuchte 2 selbst nicht elastisch in Fahrzeugquerrichtung (y-Richtung) sein, da eine Elastizität und somit ein Toleranzausgleich in Fahrzeugquerrichtung (y-Richtung) durch die c-förmigen Spannbügel 26 bereitgestellt werden kann. Die Montagefläche 4 der Kennleuchte 2 ist sowohl bei der in Figur 10 gezeigten Anordnung als auch bei der in Figur 11 gezeigten Anordnung zumindest insoweit biegeelastisch ausgebildet, dass sie sich der jeweiligen Kontur der Dachfläche 3 anpasst und somit weitestgehend vollflächig an der Dachfläche 3 anliegt.

Zu allen Figuren ist noch anzumerken, dass jeweils über zumindest drei Befestigungspunkte eine rahmenartige Aufspannung der Kennleuchte 2 mit ein oder mehreren transluzenten Gehäusekörpern realisiert sein kann.

Bei der in Figur 1 gezeigten Anordnung umfasst die Kennleuchte 2 einen vorderen transluzenten Gehäusekörper 5 und einen hinteren transluzenten Gehäusekörper 5, die jeweils zusammen mit den Verbindungselementen 10 einen sich im Wesentlichen über die gesamte Länge und die gesamte Breite erstreckenden Rahmen ergeben. Dabei sind die Verbindungselemente 10 in dieser Ausführungsform als - im Vergleich zu dem Gehäusekörper 5 - flache Elemente ausgebildet. In diesem Fall können die Verbindungselemente 10 elastisch und spannbar ausgebildet sein, um nach Art eines Spanngurtes für unterschiedliche Breiten und Längen von verschiedenen Fahrzeugen 1 geeignet zu sein. Für die transluzenten Gehäusekörper 5 ist es vorteilhaft, aber nicht zwingend erforderlich, dass diese eine Biegeelastizität aufweisen, um sich mit ihrer Unterseite an die Montagefläche 4 anpassen zu können. Es können aber auch starre, transluzente Gehäusekörper 5 zum Einsatz kommen, vorzugsweise in Verbindung mit sich vollflächig als Toleranzausgleich über die dem Fahrzeug 1 zugewandte Oberfläche erstreckenden Montageflächen 4, die sich elastisch zwischen der Unterseite des transluzenten Gehäusekörpers 5 und der jeweiligen Fahrzeugfläche (hier: Dachfläche 3) erstrecken.

Bei der in Figur 5 gezeigten Ausführungsform ist für eine vordere Kennleuchte 2 mit einem linken transluzenten Gehäusekörper 5 und einem rechten transluzenten Gehäusekörper 5 eine sich im Wesentlichen über die gesamte Breite des Fahrzeuges 1 erstreckende Montagefläche 4 vorgesehen, die flächenmäßig größer ist als die Unterseite des jeweiligen transluzenten Gehäusekörpers 5. Die Montagefläche 4 ist in dieser Ausführungsform ebenfalls in Hochrichtung flach ausgebildet im Vergleich zu den Gehäusekörpern 5. Die Montagefläche ist über vier als Kupplungselemente 12 dienende Vorsprünge 13 an dem Fahrzeug 1 befestigt, indem die Montagefläche 4 in Fahrzeugquerrichtung (y-Richtung) und in Fahrzeuglängsrichtung (x-Richtung) jeweils elastisch geweitet und somit aufgespannt ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Fahrzeug
- 2: Kennleuchte
- 3: Dachfläche
- 4: Montagefläche
- 5: transluzenter Gehäusekörper
- 6: vordere Fahrzeug-Seitenfläche
- 7: hintere Fahrzeug-Seitenfläche
- 8: rechte Fahrzeug-Seitenfläche
- 9: linke Fahrzeug-Seitenfläche
- 10: Verbindungsabschnitte
- 11: Leuchtmittel
- 12: Kupplungselement
- 13: Vorsprung
- 14: Verdickung
- 15: Öffnung
- 16: Unterseite
- 17: außenseitige Oberfläche
- 18: Schweißnaht
- 19: Gewinde
- 20: Schraubschaft
- 21: Schraubschaft
- 22: Öffnung
- 23: Mutter
- 24: Unterseite
- 25: Scheibe
- 26: Spannbügel
- 27: freies Ende

## Patentansprüche

1. Kennleuchte oder Warnleuchte für ein Fahrzeug (1), mit mindestens einem zumindest teilweise transluzenten Gehäusekörper (5) zur Aufnahme von mindestens einem Leuchtmittel (11) und mindestens einer Montagefläche (4), die im an einem Fahrzeug (1) montierten Zustand dem Fahrzeug (1) zugewandt angeordnet ist,
**dadurch gekennzeichnet,**
**dass** der mindestens eine transluzente Gehäusekörper (5) vollständig aus einem elastisch dehnbaren Werkstoff ausgebildet ist, welcher sich sowohl zur Anpassung an eine gekrümmte Oberfläche der Außenhaut eines Fahrzeuges als auch zur Montage an dem Fahrzeug ausreichend verformen lässt, und
a) **dass** die Montagefläche (4) zumindest teilweise derart elastisch ausgebildet ist, dass die Montagefläche (4) zumindest in dem elastisch ausgebildeten Bereich an eine gekrümmte Oberfläche der Außenhaut eines Fahrzeuges (1) anpassbar ist, und/oder
b) **dass** die Montagefläche (4) zumindest teilweise derart elastisch ausgebildet ist, dass die Montagefläche (4) durch elastische Dehnung und Fixierung in einem elastisch gedehnten Zustand durch Verspannen an einer gekrümmten Oberfläche der Au-ßenhaut eines Fahrzeuges (1) montierbar ist.

2. Kennleuchte oder Warnleuchte nach dem vorstehenden Anspruch, **dadurch gekennzeichnet, dass** zwei oder mehr transluzente Gehäusekörper (5) funktional mit einer Montagefläche (4) gekoppelt sind.

3. Kennleuchte oder Warnleuchte nach einem der vorstehenden Ansprüche, **dadurch gekennzeichnet, dass** an der Montagefläche (4) mehrere Kupplungselemente (12) zur Fixierung der Kennleuchte (2) oder Warnleuchte an einem Fahrzeug (1) vorgesehen sind.

4. Kennleuchte oder Warnleuchte nach dem vorstehenden Anspruch, **dadurch gekennzeichnet, dass** als Kupplungselemente (12) Öffnungen (15) und/oder Spannbänder vorgesehen sind.

5. Kennleuchte oder Warnleuchte nach einem der vorstehenden Ansprüche, **dadurch gekennzeichnet, dass** die Montagefläche (4) derart ausgebildet ist, dass sich diese von einer Dachfläche (3) eines Fahrzeuges (1) bis zu einer Fahrzeug-Seitenfläche (6, 7, 8, 9) erstreckt.

6. Kennleuchte oder Warnleuchte nach einem der vorstehenden Ansprüche, **dadurch gekennzeichnet, dass** der Gehäusekörper (5) zumindest teilweise aus einem ersten Werkstoff hergestellt ist und die Montagefläche (4) zumindest teilweise aus einem zweiten Werkstoff hergestellt ist.

7. Kennleuchte oder Warnleuchte nach dem vorstehenden Anspruch, **dadurch gekennzeichnet, dass** der Gehäusekörper (5) auf der dem Fahrzeug (1) zugewandten Seite eine L-förmige Kontur aufweist und/oder dass die Montagefläche (4) derart elastisch ausgebildet ist, dass sie sich derart in eine L-förmige Form bringen lässt, dass sie sich von der Dachfläche (3) eines Fahrzeuges (1) bis zu einer Fahrzeug-Seitenfläche (6, 7, 8, 9) erstreckt.

8. Fahrzeug mit einer daran angeordneten Kennleuchte oder Warnleuchte nach einem der vorstehenden Ansprüche , wobei die Kennleuchte oder Warnleute in einem Bereich des Fahrzeuges (1) mit einer zumindest teilweise gekrümmten Oberfläche der Außenhaut angeordnet ist.

9. Fahrzeug nach dem vorstehenden Anspruch, **dadurch gekennzeichnet, dass** die Kennleuchte (2) oder Warnleuchte durch Zusammenwirken von am Fahrzeug (1) oder an der Kennleuchte (2) oder Warnleuchte vorgesehenen Vorsprüngen (13) mit korrespondierenden Öffnungen (15) an dem jeweils anderen Element an dem Fahrzeug (1) montiert ist.

10. Fahrzeug nach einem der beiden vorstehenden Ansprüche, **dadurch gekennzeichnet, dass** sich die Montagefläche (4) im an dem Fahrzeug (1) montierten Zustand über einen Großteil der Länge des Fahrzeugdachs erstreckt und/oder dass als Verbindungselement zwischen Kennleuchte (2) oder Warnleuchte einerseits und Fahrzeug (1) andererseits klammerartige Spannbügel (26) vorgesehen sind, welche kraftschlüssig, formschlüssig und/oder stoffschlüssig gegenüber dem Fahrzeug (1) fixiert sind.

## Claims

1. A marker light or warning light for a vehicle (1) with at least one at least partially translucent housing body (5) for accommodating at least one lighting means (11) and at least one mounting surface (4) arranged facing the vehicle (1) in the state mounted on the vehicle (1),
**characterised in that**
the at least one translucent housing body (5) is formed entirely of an elastically extensible material that can be deformed sufficiently both to conform to a curved surface of the outer skin of a vehicle and for mounting to the vehicle, and
a) the mounting surface (4) is formed elastically at least partially such that the mounting surface (4) is conformable to a curved surface of the outer skin of a vehicle (1) at least in the elastically formed area, and/or
b) the mounting surface (4) is formed elastically at least partially such that the mounting surface (4) can be mounted on a curved surface of the outer skin of a vehicle (1) by elastic extension and fixation in an elastically extended state by tensioning.

2. The marker light or warning light according to the preceding claim, **characterised in that** two or more translucent housing bodies (5) are operatively coupled to a mounting surface (4).

3. The marker light or warning light according to any one of the preceding claims, **characterised in that** several coupling elements (12) for fixing the marker light (2) or warning light to a vehicle (1) are provided on the mounting surface (4).

4. The marker light or warning light according to the preceding claim, **characterised in that** openings (15) and/or tensioning straps are provided as coupling elements (12).

5. The marker light or warning light according to any one of the preceding claims, **characterised in that** the mounting surface (4) is formed such that it extends from a roof surface (3) of a vehicle (1) to a vehicle side surface (6, 7, 8, 9).

6. The marker light or warning light according to any one of the preceding claims, **characterised in that** the housing body (5) is at least partially made of a first material and the mounting surface (4) is at least partially made of a second material.

7. The marker light or warning light according to the preceding claim, **characterised in that** the housing body (5) has an L-shaped contour on the side facing the vehicle (1) and/or the mounting surface (4) is formed elastically such that it can be brought into an L-shape such that it extends from the roof surface (3) of a vehicle (1) to a vehicle side surface (6, 7, 8, 9).

8. A vehicle having a marker light or warning light according to any of the preceding claims arranged thereon, wherein the marker light or warning light is arranged in an area of the vehicle (1) with an at least partially curved outer skin surface.

9. The vehicle according to the preceding claim, **characterised in that** the marker light (2) or warning light is mounted on the vehicle (1) by co-operation of protrusions (13) provided on the vehicle (1) or the marker light (2) or warning light with corresponding openings (15) in the respective other element.

10. The vehicle according to any one of the two preceding claims, **characterised in that** the mounting surface (4) extends over a majority of the length of the vehicle roof in the state mounted on the vehicle (1) and/or clamping brackets (26) which are fixed to the vehicle (1) in a force-fit, form-fit manner and/or integrally are provided as a connecting element between the marker light (2) or warning light on the one hand and the vehicle (1) on the other side.

## Revendications

1. Balise lumineuse ou balise d'avertissement pour un véhicule (1), comprenant au moins un corps de boîtier au moins partiellement translucide (5) pour recevoir au moins un moyen d'éclairage (11) et au moins une surface de montage (4) qui, dans l'état dans lequel elle est montée sur un véhicule (1), est disposée en regard du véhicule (1),
**caractérisée en ce que**
le au moins un corps de boîtier translucide (5) est entièrement formé d'un matériau élastique déformable qui peut être suffisamment déformé à la fois pour s'adapter à une surface incurvée de l'enveloppe extérieure d'un véhicule et pour être monté sur le véhicule, et **en ce que**
a) la surface de montage (4) est conçue au moins partiellement élastique de telle sorte que la surface de montage (4) peut être adaptée à une surface incurvée de l'enveloppe extérieure d'un véhicule (1), au moins dans la zone formée élastique, et/ou
b) la surface de montage (4) est conçue au moins partiellement élastique de telle sorte que la surface de montage (4) peut être montée sur une surface incurvée de l'enveloppe extérieure d'un véhicule (1) par déformation élastique et fixée dans un état étiré élastiquement par serrage.

2. Balise lumineuse ou balise d'avertissement selon la revendication précédente, **caractérisée en ce que** deux ou corps de boîtier translucides (5) ou plus sont couplés fonctionnellement à une surface de montage (4).

3. Balise lumineuse ou balise d'avertissement selon l'une quelconque des revendications précédentes, **caractérisée en ce que** plusieurs éléments d'accouplement (12) sont prévus sur la surface de montage (4) pour une fixation de la balise lumineuse ou de la balise d'avertissement.

4. Balise lumineuse ou balise d'avertissement selon la revendication précédente, **caractérisée en ce que** des ouvertures (15) et/ou des brides de serrage sont prévues en tant qu'éléments de couplage (12).

5. Balise lumineuse ou balise d'avertissement selon l'une quelconque des revendications précédentes, **caractérisée en ce que** la surface de montage (4) est conçue de telle sorte qu'elle s'étend d'une surface de toit (3) d'un véhicule (1) à une surface latérale de véhicule (6, 7, 8, 9).

6. Balise lumineuse ou balise d'avertissement selon l'une quelconque des revendications précédentes, **caractérisée en ce que** le corps de boîtier (5) est au moins partiellement constitué d'un premier matériau et la surface de montage (4) est au moins partiellement constituée d'un second matériau.

7. Balise lumineuse ou balise d'avertissement selon la revendication précédente, **caractérisée en ce que** le corps de boîtier (5) présente un contour en forme de L sur le côté en regard du véhicule (1) et/ou **en ce que** la surface de montage (4) est conçue élastique de telle sorte qu'elle peut être amenée en forme de L de manière à s'étendre depuis la surface de toit (3) d'un véhicule (1) jusqu'à une surface latérale de véhicule (6, 7, 8, 9).

8. Véhicule avec une balise lumineuse ou une balise d'avertissement agencée sur celui-ci selon l'une quelconque des revendications précédentes, dans lequel la balise lumineuse ou la balise d'avertissement est agencée dans une zone du véhicule (1) avec une surface au moins partiellement incurvée de l'enveloppe extérieure.

9. Véhicule selon la revendication précédente, **caractérisé en ce que** la balise lumineuse ou la balise d'avertissement (2) est montée sur le véhicule (1) par coopération de saillies (13) prévues sur le véhicule (1) ou sur la balise lumineuse ou la balise d'avertissement (2) avec des ouvertures correspondantes (15) sur l'autre élément respectif.

10. Véhicule selon l'une quelconque des revendications précédentes, **caractérisé en ce que**, dans l'état monté sur le véhicule (1), la surface de montage (4) s'étend sur une grande partie de la longueur du toit du véhicule et/ou **en ce que**, en tant qu'élément de liaison entre la balise lumineuse ou la balise d'avertissement (2), d'une part, et le véhicule (1), d'autre part, des étriers de serrage (26) en forme d'agrafe, qui sont fixés contre le véhicule (1) par liaison de force, de forme et/ou de matière.
